Europäisches Patentamt

European Patent Office

Office européen des brevets

(11) Publication number: **0 019 972**
**B1**

(12) **EUROPEAN PATENT SPECIFICATION**

(45) Date of publication of patent specification: **14.11.84**

(51) Int. Cl.³: **F 16 J 9/08**

(21) Application number: **80200469.7**

(22) Date of filing: **19.05.80**

(54) A piston for internal combustion engines having a floating flame damper ring.

(30) Priority: **01.06.79 IT 2319379**
**01.06.79 IT 2319479**

(43) Date of publication of application:
**10.12.80 Bulletin 80/25**

(45) Publication of the grant of the patent:
**14.11.84 Bulletin 84/46**

(84) Designated Contracting States:
**DE FR GB SE**

(56) References cited:
**DE-A-1 906 195**
**DE-C- 882 780**
**GB-A- 22 692**
**US-A-3 174 762**
**US-A-3 542 376**

**Science et technique du motor diesel industriel
et de transport, R. Brun, pages 64 and 65**

(73) Proprietor: **Cattaneo, Leopoldo**
**Via de Alessandri 1**
**I-20144 Milano (IT)**

(72) Inventor: **Cattaneo, Leopoldo**
**Via de Alessandri 1**
**I-20144 Milano (IT)**

(74) Representative: **Giambrocono, Alfonso, Dr. Ing.
Ing. A. Giambrocono & C. S.r.l. Via Rosolino Pilo
19/B
I-20129 Milano (IT)**

Courier Press, Leamington Spa, England.

## Description

This invention relates to a piston for internal combustion engines having an improved floating flame damper ring.

Pistons provided with several type of flame dampers are already known, said flame dampers being constructed to protect the sides of the piston from the flame and pressure blows.

The known flame dampers are inserted into the piston head or provided as ring-shaped covers, are made with refractory ceramic inserted into the piston head or embedded into the piston casting or may also be hot pressed onto the same piston.

The drawbacks of said conventional flame dampers reside in that they expand together with the piston and they, therefore, require a considerable clearance and are further subjected to high stresses.

In order to avoid the above and other drawbacks, the US—A—3.174.762 discloses a piston having a groove for seating a flame damper ring, of low thermal expansion coefficient, the inside diameter of the ring and the base diameter of the groove being such that clearance is maintained during normal operation of the engine, the flame damper ring being thus substantially floating within the groove.

The DE—C—882.780 provides a piston having a groove for floatingly seating a closed type piston ring having a U-shaped cross section. Within the groove present in the outer surface of the piston ring there is located an elastic compression ring and elastic means are provided between the bottom of the U-shaped ring groove and the compression ring in a position opposite to the gap of the latter. In the operation, the elastic means pushes the U-shaped ring towards the inside of its groove on the piston so as to mask the gap of the compression ring and this to avoid any blow-by through said gap. Such an arrangement, however, has the drawback that the pressure acting on the cylinder surface is, particularly near the top dead center of the piston, very high with consequent maximum stresses, friction and wear of the ring.

The object of the present invention is to provide a piston for internal combustion engines having a floating flame damper ring so constructed to improve the efficiency of the known flame damper rings and, in particular, to allow a controlled pressure on the cylinder independently from the wear of the flame damper ring outer surface.

The piston for an internal combustion engine according to the invention, is of the type having at least one first piston ring groove for receiving a first compression ring and a flame damper ring groove located above said first compression ring for receiving a floating type flame damper ring and is characterized in that at least one groove is provided on the outer surface of said floating type flame damper ring for receiving a second elastic compression ring having tips defining a ring gap and dimensioned so as not to close on the tips when subjected to external pressure but instead to act with its inner surface on the bottom of its groove.

The flame damper ring can be advantageously made with a low expansion ferrous alloys, ceramic materials and graphite-based sintered materials. Said materials can be chromium or molybdenum plated: due to the fact that the ring does not press against the cylinder—since the expansion coefficient of chromium and molybdenum is higher than that of the selected material with which the flame damper ring is made—the covering layer, when hot, always works under compression (higher expansion than that of the substrate) and does not crack also when the outer part of the ring cool off when in the lower portion of the cylinder.

In a practical embodiment, attention has to be made that, at a steady state of the engine clearance be always left between the ring and the bottom of the groove so that no side thrust is exerted on the ring and that the material used be selected with such an expansion coefficient, variable from engine and engine, that the clearance between the hot flame damper ring and the cool cylinder at the bottom dead center of the flame damper ring be within the minimum limit which avoids the seizing.

In a practical embodiment of the invention, the piston is provided with at least one conventional groove for receiving a first compression ring and a flame damper ring groove located above said compression ring for receiving a floating type flame damper ring.

On the outer surface of the flame damper ring there is provided at least one groove for receiving a second elastic compression ring. The second elastic compression ring is dimensioned so as not to close at its tips when subjected to external pressure and thus to discharge the stress to which it is subjected directly onto the bottom of its groove instead of withstanding on said tips a combined bending and compressive stress.

## Claim

1. A piston for an internal combustion engine having at least one first piston ring groove for receiving a first compression ring and a flame damper ring groove located above said first compression piston ring for receiving a floating type flame damper ring characterized in that at least one groove is provided on the outer surface of said floating type flame damper ring for receiving a second elastic compression ring having tips defining a ring gap and dimensioned so as not to close on the tips when subjected to external pressure but instead to act with its inner surface on the bottom of its groove.

## Patentanspruch

1. Kolben für einen Verbrennungsmotor mit mindestens einer ersten Kolbenringnut zuf Aufnahme eines ersten Kompressionsrings und einer oberhalb der ersten Kompressions-kolbenrings angeordneten Flammendämpferringnut zur Aufnahme eines Flammendämpferrings von schwimmenden Typ, dadurch gekennzeichnet, daß an der äußeren Oberfläche des Flammendämpferrings von schwimmenden Typ mindestens eine Nut vorgesehen ist zur Aufnahme eines zweiten elastischen Kompressionsrings, der Spitzen aufweist, welche einen Ringspalt definieren, und so dimensioniert ist, daß bei Beaufschlagung mit externem Druck die Spitzen nich dicht aneinanderliegen, sondern er stattdessen mit seiner Innenfläche auf den Boden seiner Nut wirkt.

## Revendication

1. Un piston pour un moteur á combustion interne ayant au moins une première gorge annulaire de piston pour recevoir un premier segment de compression et une gorge pour segment pare-flammes située au-dessus dudit premier segment de compression pour recevoir un segment pare-flammes du type flottant caractérisé en ce que au moins une gorge est pourvue sur la surface externe dudit segment pare-flammes du type flottant pour recevoir un second segment élastique de compression ayant des extrémités formant un jeu de segment et dimensionné de façon à ne pas se fermer sur les extrémités quand il est soumis à une pression externe mais au lieu de cela d'agir par sa surface interne sur le fond de sa gorge.